# EUROPEAN PATENT APPLICATION

(11) **EP 4 578 596 A1**
(43) Date of publication of application: **02.07.2025**
(21) Application number: 24217326.8
(22) Date of filing: 04.12.2024
(51) Int. Cl.: B23Q 11/10, B01D 21/26, B04C 11/00

(54) **MACHINE TOOL, MACHINE TOOL CONTROL METHOD, AND MACHINE TOOL CONTROL PROGRAM**

(30) Priority: 28.12.2023 JP 2023222461
(71) Applicant: DMG Mori Co., Ltd., Yamatokoriyama-shi, Nara 639-1160 (JP)
(72) Inventor: FUNAKOSHI, Genki, Yamatokoriyama-shi, Nara 639-1160 (JP)
(74) Representative: Isarpatent

(57) **Abstract**

Provided is a new technology for detecting an abnormality related to sludge. A machine tool capable of machining a workpiece while ejecting a coolant includes a first reservoir portion for storing a coolant that contains sludge generated by machining the workpiece, a cyclone filter for separating the coolant supplied from the first reservoir portion into a clean coolant and a contaminated coolant using centrifugal force, and a control unit for controlling the machine tool. The cyclone filter includes: a first outflow tube for sending out the clean coolant; a second outflow tube for sending out the contaminated coolant; a diaphragm mechanism for restricting a flow rate of the contaminated coolant flowing through the second outflow tube; and a flow sensor for detecting the flow rate of the contaminated coolant flowing through the second outflow tube. The control unit executes predetermined abnormality handling processing based on the flow rate detected by the flow sensor being lower than a predetermined flow rate.

## Description

### TECHNICAL FIELD

The present disclosure relates to a machine tool, a control method of the machine tool, and a control program of the machine tool.

### BACKGROUND ART

JP 2020-040186A discloses a coolant supply apparatus used for a machine tool. The coolant supply apparatus includes "a supply pump configured to supply a coolant of a clean tank to a machine tool, a recovering route configured to return the coolant from the machine tool to a dirty tank, a cyclone filter arranged on a coupling route for sending the coolant from the dirty tank to the clean tank and configured to separate the coolant into dirty liquid containing sludge and clean liquid cleaner than the dirty liquid and discharge the clean liquid through an outlet connected to the clean tank, a container connected to a dirty liquid outlet of the filter and configured to accumulate the sludge, a sensing unit configured to sense an amount of accumulation of the sludge in the container; and a controller configured to perform control based on a sensing result of the sensing unit" (see paragraph [0008]).

The above coolant supply apparatus detects the amount of accumulation of the sludge in the container configured to accumulate the sludge, using an image of the container captured by a camera.

JP 2020-040186A is an example of related art.

### SUMMARY OF THE INVENTION

Since a coolant and sludge are suspended in a container, it is difficult in reality to detect the height of the sludge in the container using a camera. Therefore, there are demands for a new technology for detecting abnormalities related to sludge.

In an example of the present disclosure, a machine tool capable of machining a workpiece while ejecting a coolant is provided. The machine tool includes a first reservoir portion for storing a coolant that contains sludge generated by machining the workpiece, a cyclone filter for separating the coolant supplied from the first reservoir portion into a clean coolant and a contaminated coolant using centrifugal force, and a control unit for controlling the machine tool. The cyclone filter includes a first outflow tube for sending out the clean coolant, a second outflow tube for sending out the contaminated coolant, a diaphragm mechanism for restricting a flow rate of the contaminated coolant flowing through the second outflow tube, and a flow sensor for detecting the flow rate of the contaminated coolant flowing through the second outflow tube. The control unit executes predetermined abnormality handling processing based on the flow rate detected by the flow sensor being lower than a predetermined flow rate.

In an example of the present disclosure, the machine tool further includes a second reservoir portion for storing the contaminated coolant sent out from the second outflow tube. The second outflow tube is routed such that an outlet thereof is immersed in the contaminated coolant stored in the second reservoir portion.

In an example of the present disclosure, the machine tool further includes a collection mechanism for collecting sludge from the contaminated coolant stored in the second reservoir portion.

In an example of the present disclosure, a bottom surface of the second reservoir portion is inclined relative to a horizontal plane.

In an example of the present disclosure, the diaphragm mechanism includes a tapered conduit. The tapered conduit is configured such that an internal diameter thereof decreases along a direction in which the contaminated coolant flows.

In an example of the present disclosure, the diaphragm mechanism includes a plurality of the tapered conduits. The plurality of tapered conduits are coaxially aligned with and linked to each other along a vertical direction.

In an example of the present disclosure, the predetermined abnormality handling processing includes notification processing for performing notification that the diaphragm mechanism is clogged with the sludge.

In another example of the present disclosure, a control method of a machine tool capable of machining a workpiece while ejecting a coolant is provided. The machine tool includes a first reservoir portion for storing a coolant that contains sludge generated by machining the workpiece, and a cyclone filter for separating the coolant supplied from the first reservoir portion into a clean coolant and a contaminated coolant using centrifugal force. The cyclone filter includes a first outflow tube for sending out the clean coolant, a second outflow tube for sending out the contaminated coolant, a diaphragm mechanism for restricting a flow rate of the contaminated coolant flowing through the second outflow tube, and a flow sensor for detecting the flow rate of the contaminated coolant flowing through the second outflow tube. The control method includes: a step of acquiring the flow rate from the flow sensor; and a step of executing predetermined abnormality handling processing based on the flow rate acquired in the acquiring step being lower than a predetermined flow rate.

In another example of the present disclosure, a control program of a machine tool capable of machining a workpiece while ejecting a coolant is provided. The machine tool includes a first reservoir portion for storing a coolant that contains sludge generated by machining the workpiece, and a cyclone filter for separating the coolant supplied from the first reservoir portion into a clean coolant and a contaminated coolant using centrifugal force. The cyclone filter includes a first outflow tube for sending out the clean coolant, a second outflow tube for sending out the contaminated coolant, a diaphragm mechanism for restricting a flow rate of the contaminated coolant flowing through the second outflow tube, and a flow sensor for detecting the flow rate of the contaminated coolant flowing through the second outflow tube. The control program causes the machine tool to execute a step of acquiring the flow rate from the flow sensor, and a step of executing predetermined abnormality handling processing based on the flow rate acquired in the acquiring step being lower than a predetermined flow rate.

The above-described object, other objects, features, aspects, and advantages of the present invention will be clarified by the following detailed description of the present invention to be understood in connection with the attached drawings.

### BRIEF DESCRIPTION OF THE DRAWINGS

FIG. 1 is a diagram showing an appearance of a machine tool.
FIG. 2 is a diagram showing an example of a sludge separation mechanism.
FIG. 3 is a diagram for describing an automatic sludge collection unit.
FIG. 4 is a diagram schematically showing the condition of a machining area in the machine tool.
FIG. 5 is a diagram for describing another example of an ejection destination of a clean coolant.
FIG. 6 is a diagram showing a cross-section of a diaphragm mechanism.
FIG. 7 is a diagram showing a configuration example of drive mechanisms in the machine tool.
FIG. 8 is a diagram showing an example of the hardware configuration of a control unit.
FIG. 9 is a diagram showing an example of the hardware configuration of an operation panel.
FIG. 10 is a flowchart showing a flow of processing for monitoring an abnormality in a cyclone filter.
FIG. 11 is a diagram schematically showing a coolant mechanism in a machine tool according to a modification.

### EMBODIMENTS OF THE INVENTION

The following describes an embodiment according to the present invention with reference to the drawings. In the following description, the same components and the same constitutional elements are denoted by the same reference numeral. Those components and constitutional elements have the same name and the same function. Accordingly, detailed descriptions of those components and constitutional elements are not repeated. The following embodiments and modifications can be selectively combined as appropriate.

### A. Appearance of Machine Tool 100

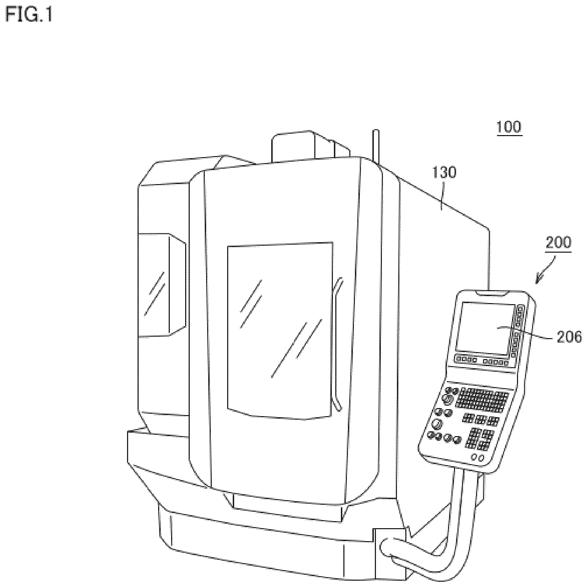

First, a machine tool 100 according to an embodiment will be described with reference to FIG. 1. FIG. 1 is a diagram showing an appearance of the machine tool 100.

The term "machine tool" as used in the present specification is a concept that encompasses various apparatuses having functions of machining workpieces. The machine tool 100 may be a horizontal machining center or a vertical machining center. Alternatively, the machine tool 100 may be a lathe, or any other cutting machine, griding machine, complex processing machine, five-axis processing machine, or the like. Furthermore, the machine tool 100 is not limited to those that perform only subtractive manufacturing, but may also perform additive manufacturing in addition to subtractive manufacturing.

The machine tool 100 includes, for example, a cover body 130 and an operation panel 200. The cover body 130, also called a splash guard, forms the appearance of the machine tool 100, and also defines a machining area for workpieces.

The operation panel 200 is a general-purpose computer and has a display 206 for displaying various types of information related to machining. The display 206 is, for example, a liquid crystal display, an organic electroluminescence (EL) display, or any other display device. The display 206 also has a touch panel to accept various operations on the machine tool 100 input through touch operation.

The machine tool 100 machines a workpiece while ejecting a coolant to the machining area in the machine tool 100. The coolant used for machining contains sludge. Sludge is minute chips generated by machining workpieces. The machine tool 100 separates sludge from the coolant used for machining, and reuses the coolant after the removal of the sludge to machine a workpiece.

### B. Sludge Separation Mechanism

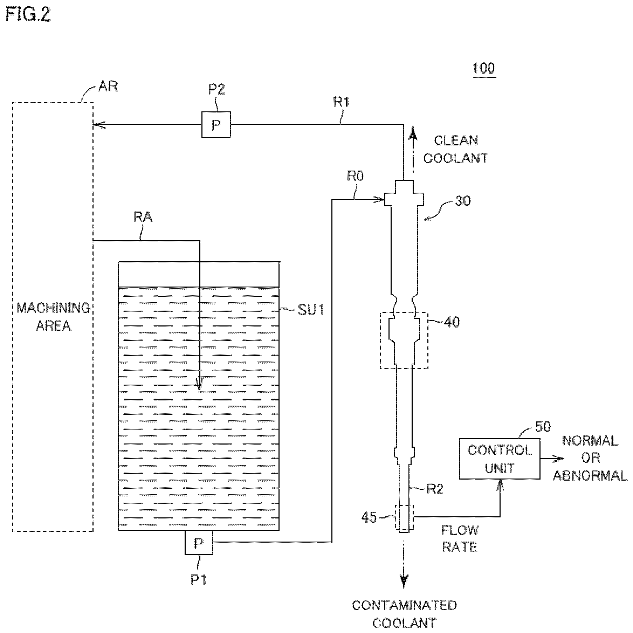

Next, a sludge separation mechanism will be described with reference to FIG. 2. FIG. 2 is a diagram showing an example of a sludge separation mechanism.

As shown in FIG. 2, the machine tool 100 includes the machining area AR, a reservoir portion SU1, a cyclone filter 30, and a control unit 50.

A coolant used for machining a workpiece is discharged from the machining area AR, and is stored in the reservoir portion SU1 through a flow path RA. The coolant stored in the reservoir portion SU1 contains sludge.

The cyclone filter 30 is a mechanism for separating the coolant supplied from the reservoir portion SU1 into a clean coolant and a contaminated coolant using centrifugal force. The content of sludge in the clean coolant is smaller than the content of sludge in the contaminated coolant. Typically, a clean coolant contains no sludge. The content is represented by the weight of sludge contained per unit volume, for example.

More specifically, an inflow tube R0, an outflow tube R1 (first outflow tube), and an outflow tube R2 (second outflow tube) are connected to the cyclone filter 30.

One end of the inflow tube R0 is connected to the reservoir portion SU1. The other end of the inflow tube R0 is connected to an inlet of the cyclone filter 30. In addition, a pump P1 is provided on the inflow tube R0. The pump P1 pumps the coolant in the reservoir portion SU1 to the inflow tube R0, to send the coolant to the inlet of the cyclone filter 30.

The coolant sent to the cyclone filter 30 flows spirally inside the cyclone filter 30. In this process, heavy sludge falls in the gravity direction along with a portion of the coolant, and is discharged from an outlet on the lower side of the cyclone filter 30. Accordingly, the contaminated coolant that contains a large amount of sludge is discharged to the outflow tube R2.

In addition, the cyclone filter 30 is provided with a diaphragm mechanism 40. The diaphragm mechanism 40 is a mechanism for restricting the flow rate of the contaminated coolant flowing through the outflow tube R2. The diaphragm mechanism 40 functions as a source of resistance, and the coolant rises in the opposite direction to the gravity direction in a process of spirally flowing inside the cyclone filter 30. As a result, the clean coolant that contains no sludge is discharged to the outflow tube R1.

In addition, a pump P2 is provided on the outflow tube R1. The pump P2 pumps the clean coolant from the cyclone filter 30. Accordingly, the clean coolant is pumped through the outflow tube R1.

### C. Clogging Detection Function

Next, a function for detecting sludge clogging will be described with reference to FIG. 2.

If the cyclone filter 30 continues to be used, sludge accumulates in the diaphragm mechanism 40. As a result, there is the possibility that the diaphragm mechanism 40 will be clogged with sludge. A flow sensor 45 is provided in the outflow tube R2 in order to detect such clogging.

The flow sensor 45 is a sensor for detecting the flow rate of the contaminated coolant flowing through the outflow tube R2. Preferably, the flow sensor 45 is disposed downstream of the diaphragm mechanism 40 in the direction in which the coolant flows.

The flow sensor 45 may be any type of flow sensor. As an example, a non-contact sensor that can detect the flow rate of a coolant from outside the outflow tube R2 without coming into contact with the coolant flowing inside the outflow tube R2 is adopted as the flow sensor 45. Examples of the non-contact flow sensor 45 include an ultrasonic flow sensor, an electromagnetic flow sensor, and the like. A result of the flow sensor 45 detecting the flow rate is output to the control unit 50.

The control unit 50 is a device for controlling the machine tool 100. The control unit 50 may have any device configuration. The control unit 50 may be constituted by a single control unit, or may also be constituted by a plurality of control units. As an example, the control unit 50 includes at least one of a programmable logic controller (PLC) and computer numerical control (CNC).

As the amount of sludge accumulated in the diaphragm mechanism 40 increases, the flow rate of the coolant flowing through the outflow tube R2 decreases. With a focus on this, the control unit 50 determines whether or not sludge clogging has occurred, based on the flow rate detected by the flow sensor 45.

More specifically, if the flow rate detected by the flow sensor 45 is higher than or equal to a predetermined flow rate, the control unit 50 performs determination as a normal state where sludge clogging has not occurred. On the other hand, when the flow rate detected by the flow sensor 45 is lower than the predetermined flow rate, the control unit 50 performs determination as an abnormality state where sludge clogging has occurred. Accordingly, the control unit 50 can detect an abnormality related to sludge clogging.

If it is determined that sludge clogging has occurred, the control unit 50 executes predetermined abnormality handling processing. As an example of abnormality handling processing, the control unit 50 executes notification processing for performing notification that the diaphragm mechanism 40 is clogged with sludge. Accordingly, the user can recognize that the diaphragm mechanism 40 is clogged with sludge.

Sludge clogging can be notified in any mode. As an example, the control unit 50 outputs an alert to the display 206 of the above operation panel 200. As another example, the control unit 50 outputs an alert on a display (not illustrated) provided on the flow sensor 45. As another example, the control unit 50 turns on a light of an indicator (not illustrated) provided on the flow sensor 45. As yet another example, the control unit 50 outputs a sound alert from a speaker (not illustrated) provided in the machine tool 100.

As another example of abnormality handling processing, the control unit 50 executes processing for stopping a coolant ejection mechanism. Accordingly, the control unit 50 can prevent the coolant that contains sludge from flowing to the outflow tube R1.

### D. Sludge Collection Mechanism

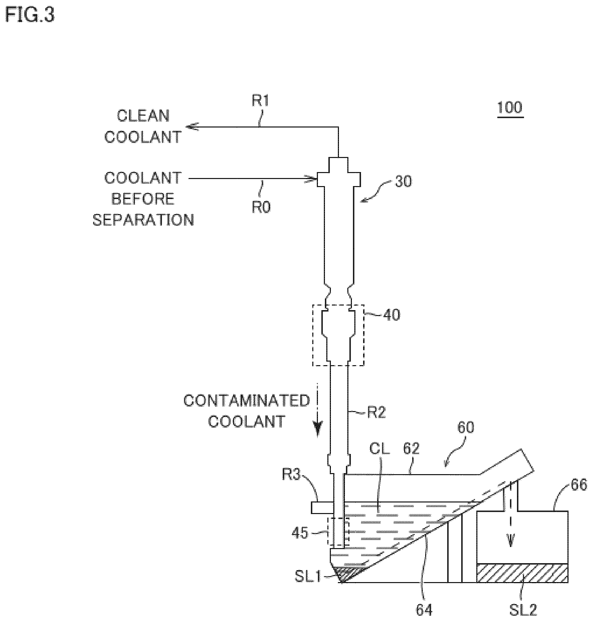

Next, an automatic sludge collection mechanism will be described with reference to FIG. 3. FIG. 3 is a diagram for describing an automatic sludge collection unit 60.

As an example, the automatic collecting unit 60 includes a reservoir portion 62, a collection mechanism 64, and a collection container 66.

The reservoir portion 62 (second reservoir portion) is a tank for storing the contaminated coolant discharged from the outflow tube R2 of the cyclone filter 30. In the example in FIG. 3, a contaminated coolant CL is stored in the reservoir portion 62.

Preferably, the outflow tube R2 is routed such that the outlet thereof is immersed in the contaminated coolant CL stored in the reservoir portion 62. That is to say, the outlet of the outflow tube R2 is disposed below the liquid surface of the coolant CL. Since the outlet of the outflow tube R2 is always immersed in the coolant CL, the air is prevented from backflowing into the outflow tube R2. Accordingly, the flow sensor 45 can accurately detect the flow rate of the coolant flowing through the outflow tube R2. The collection mechanism 64 is a conveyance mechanism for collecting sludge SL1 from the coolant CL stored in the reservoir portion 62. The collection mechanism 64 is constituted by a conveyor and the like. The collection mechanism 64 conveys the sludge SL1 deposited in the reservoir portion 62, and discharges the sludge SL1 to the collection container 66. In this manner, the collection mechanism 64 can separate the sludge SL1 from the coolant CL, and can gather, into the collection container 66, sludge SL2 that contains no coolant.

Preferably, the bottom surface of the reservoir portion 62 is inclined relative to a horizontal plane. In other words, the bottom surface of the reservoir portion 62 is not parallel to the horizontal plane. Accordingly, the sludge SL1 gathers at a bottom portion of the reservoir portion 62, making it easy for the collection mechanism 64 to collect the sludge SL1.

The collection mechanism 64 is disposed along the inclined bottom surface. At this time, the collection mechanism 64 is disposed in the reservoir portion 62 such that a portion of the collection mechanism 64 is immersed in the coolant CL in the reservoir portion 62, and the remaining portion of the collection mechanism 64 is not immersed in the coolant CL. Accordingly, the collection mechanism 64 can collect not only the sludge SL1, but also oil floating on the liquid surface of the coolant CL.

In addition, an outflow tube R3 is connected to the reservoir portion 62. The coolant CL stored in the reservoir portion 62 is returned to the above reservoir portion SU1 through the outflow tube R3, for example (see FIG. 2). Accordingly, the coolant CL is reused.

### E. Coolant Mechanism in Machining Area AR

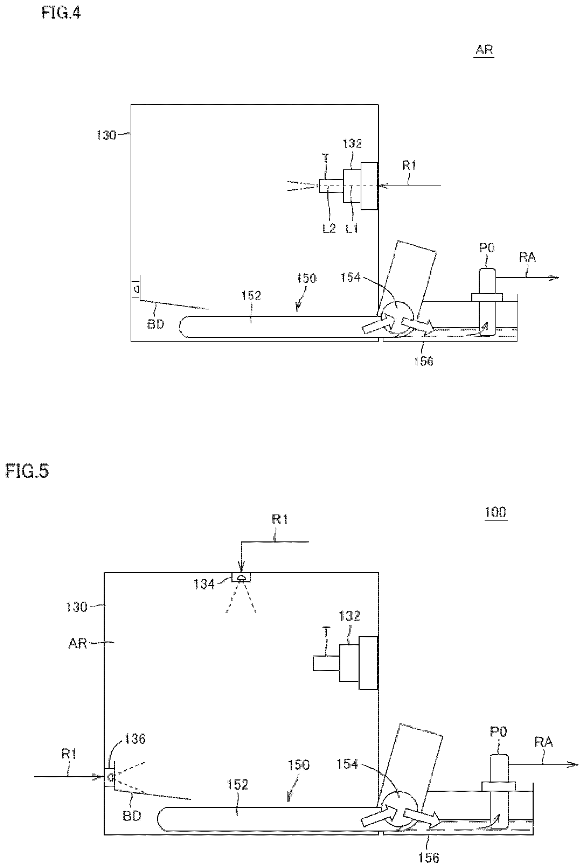

Next, an example of a coolant mechanism of the above machining area AR shown in FIG. 2 will be described with reference to FIG. 4. FIG. 4 is a diagram schematically showing the condition of the machining area AR in the machine tool 100.

The machining area AR is provided with a spindle 132 and a chip conveyor 150, for example.

The spindle 132 is provided inside a housing, and is rotatably supported by the housing. A tool T for machining a workpiece that is to be machined is mounted on the spindle 132. The spindle 132 machines the workpiece by bringing the tool T into contact with the workpiece while rotating the tool T about the axial direction of the spindle 132.

A communication path L1 that is a coolant ejection mechanism is formed in the spindle 132. The communication path L1 passes through the spindle 132 along the axial direction of the spindle 132. One end of the communication path L1 is connected to the above outflow tube R1 (see FIG. 2).

Various types of tools can be mounted on the spindle 132. In the example in FIG. 4, the tool T in which a through path L2 is formed is mounted on the spindle 132. The through path L2 extends from the connection surface between the tool T and the spindle 132 to a leading end of the tool T, and passes through the tool T along the axial direction of the spindle 132. Note that an opening of the through path L2 that is formed in the tool T is not limited to being formed in a base end surface or a leading end surface of the tool T, but may be formed in a side surface portion of the tool T, for example.

The clean coolant sent from the above cyclone filter 30 flows through the outflow tube R1, the communication path L1, and the through path L2 in the stated order, and is ejected from the leading end of the tool T to the workpiece that is a machining target. Accordingly, chips generated by machining the workpiece are discharged to the chip conveyor 150.

The chip conveyor 150 includes a cover body 152, a filtration mechanism 154, and a tank 156. The filtration mechanism 154 is configured to be capable of catching foreign objects such as chips from the coolant. The coolant that has passed through the filtration mechanism 154 is discharged from inside the cover body 152 of the chip conveyor 150 to the tank 156.

A pump P0 is provided in the tank 156. The pump P0 pumps up the coolant that has passed through the filtration mechanism 154 and is stored in the tank 156, and pumps the coolant to the flow path RA. The coolant is sent to the above reservoir portion SU1 (see FIG. 2) through the flow path RA.

Note that an example has been described above in which a center-through specification for ejecting the coolant from the cutting edge of the tool T is adopted as the ejection mechanism of the spindle 132, but the coolant ejection mechanism that is adopted for the spindle 132 is not limited thereto. As an example, the coolant ejection mechanism that is adopted for the spindle 132 may also have a side-through specification for ejecting a coolant from an end surface of the spindle 132.

In addition, the ejection destination of a clean coolant from the cyclone filter 30 is not limited to the spindle 132. FIG. 5 is a diagram for describing another example of the ejection destination of a clean coolant. FIG. 5 shows ejection mechanisms 134 and 136 as the ejection destinations of a clean coolant.

The ejection mechanism 134 is a mechanism for ejecting the clean coolant pumped from the outflow tube R1, to the entirety of the machining area AR. By the ejection mechanism 134 ejecting the coolant to the machining area AR, chips of the workpiece in the machining area AR are discharged to the chip conveyor 150.

The ejection mechanism 136 ejects the clean coolant pumped from the outflow tube R1 to the upper side of a bed BD. By the ejection mechanism 136 ejecting the coolant to the upper side of the bed BD, chips accumulated on the bed BD are discharged to the chip conveyor 150.

### F. Diaphragm Mechanism 40

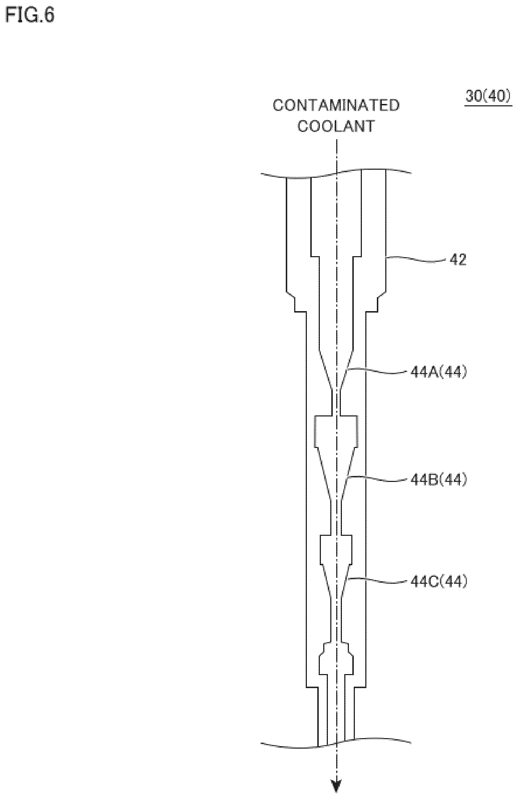

Next, an example of the above diaphragm mechanism 40 shown in FIG. 2 will be described with reference to FIG. 6. FIG. 6 is a diagram showing a cross-section of the diaphragm mechanism 40.

Any mechanism for restricting the flow rate of the coolant inside the outflow tube R2 can be adopted as the diaphragm mechanism 40. In the example in FIG. 6, a tapered conduit 44 whose internal diameter decreases along the direction in which the contaminated coolant flows is adopted as the diaphragm mechanism 40.

A single tapered conduit 44 may be provided in the diaphragm mechanism 40 or a plurality of tapered conduits 44 may also be provided. In the example in FIG. 6, three tapered conduits 44A to 44C are provided in the diaphragm mechanism 40. Hereinafter, the tapered conduits 44A to 44C may also be referred to as "tapered conduits 44" when they are not particularly distinguished from each other.

Sludge is unlikely to be retained in the tapered conduits 44. For this reason, the diaphragm mechanism 40 is unlikely to be clogged with sludge. In addition, by adopting a tapered conduit as the diaphragm mechanism 40, it is also possible to increase the flow path resistance in the outflow tube R2.

The tapered conduits 44A to 44C are coaxially aligned with and linked to each other along the vertical direction. By adopting the plurality of tapered conduits 44A to 44C as the diaphragm mechanism 40, the flow path resistance in the outflow tube R2 further increases.

Note that the tapered conduits 44 are described above as an example of a mechanism that is adopted as the diaphragm mechanism 40, but a mechanism that is adopted as the diaphragm mechanism 40 is not limited thereto. As an example, a ball valve may also be adopted as the diaphragm mechanism 40.

### G. Drive Mechanisms

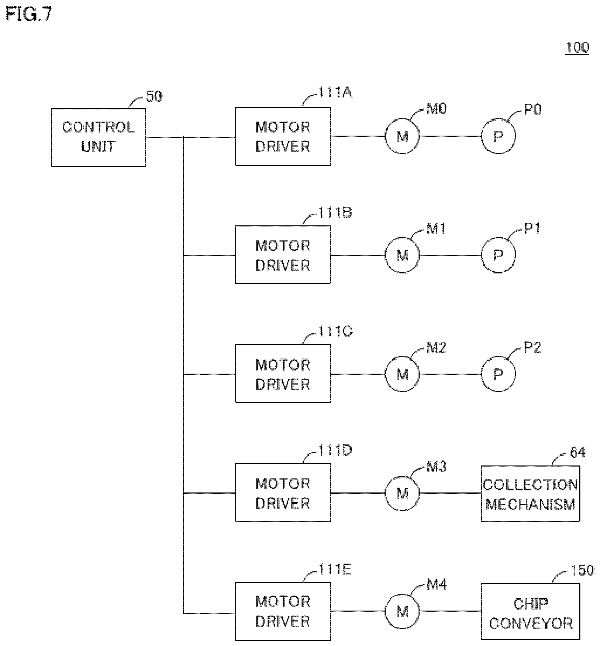

Next, various drive mechanisms in the machine tool 100 will be described with reference to FIG. 7. FIG. 7 is a diagram showing a configuration example of drive mechanisms in the machine tool 100.

As shown in FIG. 7, the machine tool 100 includes, as its constitutional components pertaining to the drive mechanisms, the control unit 50, motor drivers 111A to 111E, motors M0 to M4, the above-described pumps P0 to P2, the above-described collection mechanism 64, and the above-described chip conveyor 150.

As described above, the pump P0 is a device for pumping a coolant to the flow path RA (see FIGS. 2 and 4). The motor M0 is connected to the pump P0. The motor M0 may be an AC motor, a stepping motor, a servo motor, or another type of motor.

The motor M0 is driven by the motor driver 111A. The motor driver 111A is constituted by a control circuit, an inverter, and the like. The motor driver 111A receives a control signal input from the control unit 50 and outputs an alternating current at a frequency corresponding to the control signal to the motor M0. This changes the number of rotations of the motor M0 and controls the flow rate of the coolant pumped into the above-described flow path RA.

As described above, the pump P1 is a device for pumping a coolant to the inflow tube R0 (see FIG. 2). The motor M1 is connected to the pump P1. The motor M1 may be an AC motor, a stepping motor, a servo motor, or another type of motor.

The motor M1 is driven by the motor driver 111B. The motor driver 111B is constituted by a control circuit, an inverter, and the like. The motor driver 111B receives a control signal input from the control unit 50 and outputs an alternating current at a frequency corresponding to the control signal to the motor M1. This changes the number of rotations of the motor M1 and controls the flow rate of the coolant pumped into the above-described inflow tube R0.

As described above, the pump P2 is a device for pumping a coolant to the outflow tube R1 (see FIGS. 2 and 4). The motor M2 is connected to the pump P2. The motor M2 may be an AC motor, a stepping motor, a servo motor, or another type of motor.

The motor M2 is driven by the motor driver 111C. The motor driver 111C is constituted by a control circuit, an inverter, and the like. The motor driver 111C receives a control signal input from the control unit 50 and outputs an alternating current at a frequency corresponding to the control signal to the motor M2. This changes the number of rotations of the motor M2 and controls the flow rate of the coolant that is pumped to the above outflow tube R1.

The motor M3 is connected to the above collection mechanism 64 (see FIG. 3). The motor M3 may be an AC motor, a stepping motor, a servo motor, or another type of motor.

The motor M3 is driven by the motor driver 111D. The motor driver 111D is constituted by a control circuit, an inverter, and the like. The motor driver 111D receives a control signal input from the control unit 50 and outputs an alternating current at a frequency corresponding to the control signal to the motor M3. This changes the number of rotations of the motor M3 and controls the rotation speed of a conveyor in the collection mechanism 64.

The motor M4 is connected to the above chip conveyor 150 (see FIG. 4). The motor M4 may be an AC motor, a stepping motor, a servo motor, or another type of motor.

The motor M4 is driven by the motor driver 111E. The motor driver 111E is constituted by a control circuit, an inverter, and the like. The motor driver 111E receives a control signal input from the control unit 50 and outputs an alternating current at a frequency corresponding to the control signal to the motor M4. This changes the number of rotations of the motor M4 and controls the rotation speed of a conveyor of the chip conveyor 150.

### H. Hardware Configuration of Control Unit 50

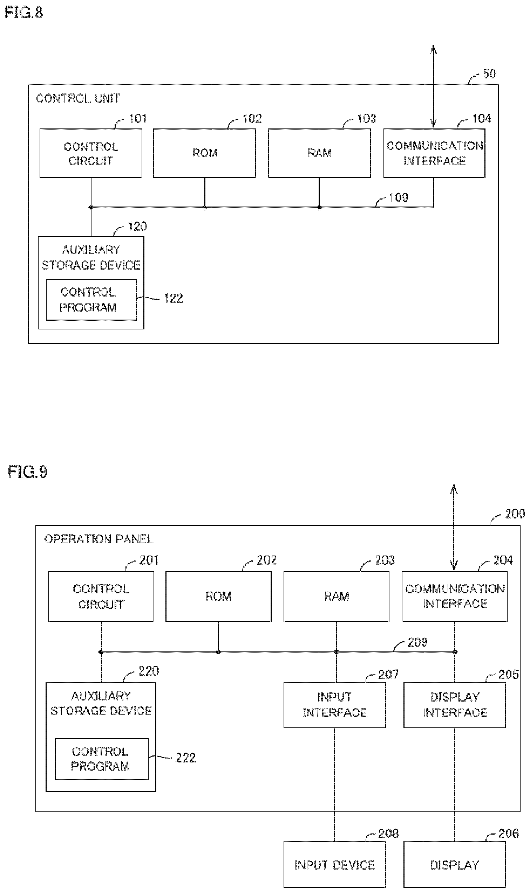

Next, the hardware configuration of the above control unit 50 shown in FIG. 2 will be described with reference to FIG. 8. FIG. 8 is a diagram showing an example of the hardware configuration of the control unit 50.

The control unit 50 includes a control circuit 101, a read only memory (ROM) 102, a random access memory (RAM) 103, a communication interface 104, and an auxiliary storage device 120. These components are connected to an internal bus 109.

The control circuit 101 is constituted by at least one integrated circuit, for example. The integrated circuit may be constituted by, for example, at least one CPU, at least one graphics processing unit (GPU), at least one application specific integrated circuit (ASIC), at least one field programmable gate array (FPGA), a combination thereof, or the like.

The control circuit 101 controls the operation of the control unit 50 by executing various programs such as a control program 122. The control program 122 is a program for realizing various types of processing described in the present specification. The control circuit 101 reads out the control program 122 from the auxiliary storage device 120 or the ROM 102 to the RAM 103 based on the fact that a command to execute the control program 122 has been accepted. The RAM 103 functions as a working memory and temporarily stores various types of data necessary for the execution of the control program 122.

The communication interface 104 is an interface for performing periodic communication with external devices using a field network. The external devices include the above flow sensor 45 and the above motor drivers 111A to 111E. EtherCAT (registered trademark), EtherNet/IP (registered trademark), CC-Link (registered trademark), CompoNet (registered trademark), or the like is adopted as the field network.

The auxiliary storage device 120 is a storage medium such as a hard disk or a flash memory. The auxiliary storage device 120 stores the control program 122 and the like. Note that the storage location of the control program 122 is not limited to the auxiliary storage device 120, and the control program 122 may be stored in a storage area (e.g., a cache memory) of the control circuit 101, the ROM 102, the RAM 103, an external device (e.g., a server), or the like.

In addition, the control program 122 may be provided not as a stand-alone program, but as a program incorporated into a part of any program. In this case, various types of processing according to this embodiment are realized in cooperation with any suitable program. Even if the program does not include some of these modules, it does not depart from the gist of the control program 122 according to this embodiment. Furthermore, some or all of the functions provided by the control program 122 may be realized by dedicated hardware. Furthermore, the control unit 50 may be configured in the form of a so-called cloud service in which at least one server executes part of the processing of the control program 122.

### I. Hardware Configuration of Operation Panel 200

Next, the hardware configuration of the operation panel 200 shown in FIG. 1 will be described with reference to FIG. 9. FIG. 9 is a diagram showing an example of the hardware configuration of the operation panel 200.

The operation panel 200 includes a control circuit 201, a ROM 202, a RAM 203, a communication interface 204, a display interface 205, an input interface 207, and an auxiliary storage device 220. These components are connected to a bus 209.

The control circuit 201 is constituted by at least one integrated circuit, for example. The integrated circuit can be constituted by at least one CPU, at least one GPU, at least one ASIC, at least one FPGA, a combination thereof, or the like.

The control circuit 201 controls the operation of the operation panel 200 by executing various programs such as a control program 222 or programs of an operating system. The control circuit 201 reads the control program 222 from the auxiliary storage device 220 or the ROM 202 to the RAM 203 based on the fact that a command to execute the control program 222 has been accepted. The RAM 203 functions as a working memory and temporarily stores various types of data necessary for the execution of the control program 222.

A LAN, an antenna, and the like are connected to the communication interface 204. The operation panel 200 is connected to a network via the communication interface 204. Accordingly, the operation panel 200 transmits and receives data to and from external devices connected to the network. The external devices include the above-described control unit 50, a server (not illustrated), and the like.

The display 206 is connected to the display interface 205. The display interface 205 sends an image signal for displaying an image to the display 206 in accordance with an instruction from the control circuit 201 or the like. The display 206 is a liquid crystal display, an organic EL display, or another display device, for example. Note that the display 206 may be configured integrally with the operation panel 200, or may also be configured separately from the operation panel 200.

An input device 208 is connected to the input interface 207. The input device 208 is a mouse, a keyboard, a touch panel, or another device that can accept a user operation, for example. Note that the input device 208 may be configured integrally with the operation panel 200, or may be configured separately from the operation panel 200.

The auxiliary storage device 220 is, for example, a storage medium such as a hard disk or a flash memory. The auxiliary storage device 220 stores the control program 222 and the like. The storage location of the control program 222 is not limited to the auxiliary storage device 220, and the control program 222 may be stored in a storage area (e.g., a cache memory) of the control circuit 201, the ROM 202, the RAM 203, an external device (e.g., a server), or the like.

### J. Flowchart

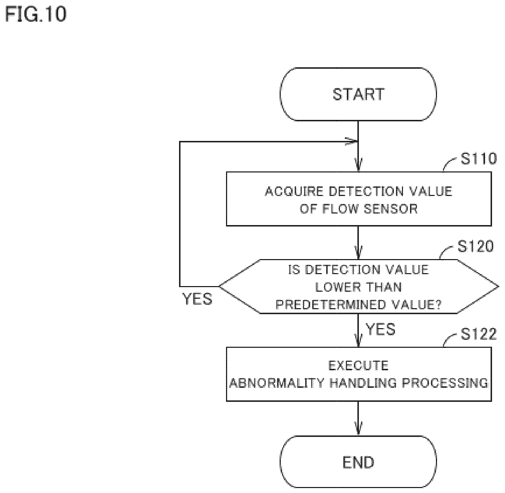

Next, processing for monitoring an abnormality in the cyclone filter 30 will be described with reference to FIG. 10. FIG. 10 is a flowchart showing a flow of processing for monitoring an abnormality in the cyclone filter 30.

The processing shown in FIG. 10 is realized by the control unit 50 of the machine tool 100 executing the above control program 122. In another aspect, a portion or the entirety of the processing may be executed by CNC, a circuit element, or other hardware.

Typically, processing shown in FIG. 10 is executed in a process in which a coolant is used in the machine tool 100 (for example, a machining process).

More specifically, in step S 110, the control unit 50 acquires a coolant flow rate detected by the above flow sensor 45. The coolant flow rate refers to the flow rate of the contaminated coolant that is being discharged from the lower side of the cyclone filter 30 (see FIG. 2).

In step S120, the control unit 50 determines whether or not the coolant flow rate acquired in step S110 is lower than a predetermined flow rate. The predetermined flow rate may be set in advance, or may be suitably set by the user. If it is determined that the coolant flow rate is lower than the predetermined flow rate (YES in step S 120), the control unit 50 determines that the cyclone filter 30 is clogged with sludge, and switches the control to step S122. If not (NO in step S120), the control unit 50 determines that the cyclone filter 30 is not clogged with sludge, and returns the control to step S110.

In step S122, the control unit 50 executes predetermined abnormality handling processing. As an example of abnormality handling processing, the control unit 50 executes notification processing for performing notification that the cyclone filter 30 is clogged with sludge. Accordingly, the user can recognize that the cyclone filter 30 is clogged with sludge.

### K. Modified Example

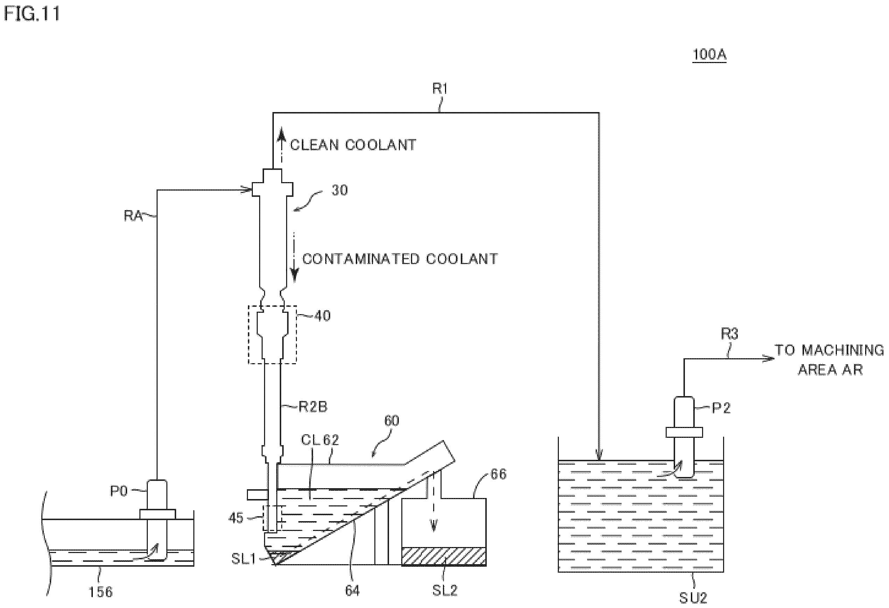

Next, a machine tool 100A according to a modification will be described with reference to FIG. 11. FIG. 11 is a diagram schematically showing a coolant mechanism in the machine tool 100A.

In the above examples in FIGS. 2 and 4, the coolant stored in the tank 156 is sent to the reservoir portion SU1 by the pump P0, and the coolant stored in the reservoir portion SU1 is sent to the cyclone filter 30 by the pump P1. That is to say, the coolant stored in the tank 156 is indirectly sent to the cyclone filter 30 via the reservoir portion SU1. In contrast, in the machine tool 100A according to the present modification, the coolant stored in the tank 156 is directly sent to the cyclone filter 30 by the pump P0.

In addition, in the above examples in FIGS. 2 and 4, the clean coolant discharged from the cyclone filter 30 is directly sent to the machining area AR by the pump P2. In contrast, in the machine tool 100A according to the present modification, the clean coolant discharged from the cyclone filter 30 is temporarily stored in a reservoir portion SU2. The coolant stored in the reservoir portion SU2 is then sent to the machining area AR by the pump P2. In this manner, in the present modification, the clean coolant discharged from the cyclone filter 30 is indirectly sent to the machining area AR via the reservoir portion SU2.

The embodiment disclosed herein is illustrative in all aspects and should not be considered as restrictive. The scope of the present invention is defined not by the above descriptions but by the claims, and is intended to encompass all modifications within the meanings and scope that are equivalent to the claims.

### LIST OF REFERENCE NUMERALS

- 30: Cyclone filter
- 40: Diaphragm mechanism
- 44: Tapered conduit
- 44A: Tapered conduit
- 44B: Tapered conduit
- 44C: Tapered conduit
- 45: Flow sensor
- 50: Control unit
- 60: Automatic collection unit
- 62: Reservoir portion
- 64: Collection mechanism
- 66: Collection container
- 100: Machine tool
- 100A: Machine tool
- 101: Control circuit
- 102: ROM
- 103: RAM
- 104: Communication interface
- 109: Internal bus
- 111A: Motor driver
- 111B: Motor driver
- 111C: Motor driver
- 111D: Motor driver
- 111E: Motor driver
- 120: Auxiliary storage device
- 122: Control program
- 130: Cover body
- 132: Spindle
- 134: Ejection mechanism
- 136: Ejection mechanism
- 150: Chip conveyor
- 152: Cover body
- 154: Filtration mechanism
- 156: Tank
- 200: Operation panel
- 201: Control circuit
- 202: ROM
- 203: RAM
- 204: Communication interface
- 205: Display interface
- 206: Display
- 207: Input interface
- 208: Input device
- 209: Bus
- 220: Auxiliary storage device
- 222: Control program
- AR: Machining area
- BD: Bed
- CL: Coolant
- L1: Communication path
- L2: Through path
- M0: Motor
- M1: Motor
- M2: Motor
- M3: Motor
- M4: Motor
- P0: Pump
- P1: Pump
- P2: Pump
- R0: Inflow tube
- R1: Outflow tube
- R2: Outflow tube
- R3: Outflow tube
- RA: Flow path
- SL1: Sludge
- SL2: Sludge
- SU1: Reservoir portion
- SU2: Reservoir portion
- T: Tool

## Claims

1. A machine tool capable of machining a workpiece while ejecting a coolant, comprising:
a first reservoir portion for storing a coolant that contains sludge generated by machining the workpiece;
a cyclone filter for separating the coolant supplied from the first reservoir portion into a clean coolant and a contaminated coolant using centrifugal force; and
a control unit for controlling the machine tool,
wherein the cyclone filter includes:
a first outflow tube for sending out the clean coolant;
a second outflow tube for sending out the contaminated coolant;
a diaphragm mechanism for restricting a flow rate of the contaminated coolant flowing through the second outflow tube; and
a flow sensor for detecting the flow rate of the contaminated coolant flowing through the second outflow tube, and
the control unit executes predetermined abnormality handling processing based on the flow rate detected by the flow sensor being lower than a predetermined flow rate.

2. The machine tool according to claim 1, further comprising
a second reservoir portion for storing the contaminated coolant sent out from the second outflow tube,
wherein the second outflow tube is routed such that an outlet thereof is immersed in the contaminated coolant stored in the second reservoir portion.

3. The machine tool according to claim 2, further comprising
a collection mechanism for collecting sludge from the contaminated coolant stored in the second reservoir portion.

4. The machine tool according to claim 2 or 3,
wherein a bottom surface of the second reservoir portion is inclined relative to a horizontal plane.

5. The machine tool according to claim 1 or 2,
wherein the diaphragm mechanism includes a tapered conduit, and
the tapered conduit is configured such that an internal diameter thereof decreases along a direction in which the contaminated coolant flows.

6. The machine tool according to claim 5,
wherein the diaphragm mechanism includes a plurality of the tapered conduits, and
the plurality of tapered conduits are coaxially aligned with and linked to each other along a vertical direction.

7. The machine tool according to claim 1 or 2,
wherein the predetermined abnormality handling processing includes notification processing for performing notification that the diaphragm mechanism is clogged with the sludge.

8. A control method of a machine tool capable of machining a workpiece while ejecting a coolant,
wherein the machine tool includes:
a first reservoir portion for storing a coolant that contains sludge generated by machining the workpiece, and
a cyclone filter for separating the coolant supplied from the first reservoir portion into a clean coolant and a contaminated coolant using centrifugal force,
the cyclone filter includes:
a first outflow tube for sending out the clean coolant;
a second outflow tube for sending out the contaminated coolant;
a diaphragm mechanism for restricting a flow rate of the contaminated coolant flowing through the second outflow tube; and
a flow sensor for detecting the flow rate of the contaminated coolant flowing through the second outflow tube, and
the control method includes:
a step of acquiring the flow rate from the flow sensor; and
a step of executing predetermined abnormality handling processing based on the flow rate acquired in the acquiring step being lower than a predetermined flow rate.

9. A control program of a machine tool capable of machining a workpiece while ejecting a coolant,
wherein the machine tool includes:
a first reservoir portion for storing a coolant that contains sludge generated by machining the workpiece, and
a cyclone filter for separating the coolant supplied from the first reservoir portion into a clean coolant and a contaminated coolant using centrifugal force,
the cyclone filter includes:
a first outflow tube for sending out the clean coolant;
a second outflow tube for sending out the contaminated coolant;
a diaphragm mechanism for restricting a flow rate of the contaminated coolant flowing through the second outflow tube; and
a flow sensor for detecting the flow rate of the contaminated coolant flowing through the second outflow tube, and
the control program causes the machine tool to execute:
a step of acquiring the flow rate from the flow sensor; and
a step of executing predetermined abnormality handling processing based on the flow rate acquired in the acquiring step being lower than a predetermined flow rate.
